# EUROPÄISCHE PATENTSCHRIFT

(11) **EP 0 435 113 B1**
(45) Veröffentlichungstag und Bekanntmachung des Hinweises auf die Patenterteilung: **01.06.1994**
(21) Anmeldenummer: 90124248.7
(22) Anmeldetag: 14.12.1990
(51) Int. Cl.: B60T 8/00, B60T 13/52

(54) **Fahrzeugbremsanlage**
Vehicle brake installation
Installation de freinage de véhicule

(30) Priorität: 27.12.1989 DE 3943002
(43) Veröffentlichungstag der Anmeldung: 03.07.1991
(73) Patentinhaber: LUCAS INDUSTRIES PUBLIC LIMITED COMPANY, Solihull, West Midlands B91 3TX (GB)
(72) Erfinder: Heibel, Helmut, W-5431 Moschheim (DE); Pickenhahn, Josef, W-5472 Plaidt (DE)
(74) Vertreter: von Hellfeld, Axel, Dr. Dipl.-Phys.

(56) Entgegenhaltungen:
- EP-A- 0 136 689
- EP-A- 0 151 028
- DE-A- 3 705 333
- DE-C- 3 325 854
- PATENT ABSTRACTS OF JAPAN vol. 9, no. 294 (M-431)(2017) 20 November 1985; & JP-A-60 131356 (Tokico) 13 Juli 1985
- PATENT ABSTRACTS OF JAPAN vol. 8, no. 32 (M-275)(1469) 10 Februar 1984;& JP-A-58 188746 (Tokico) 04 November 1983
- PATENT ABSTRACTS OF JAPAN vol. 7, no. 223 (M-247)(1368) 04 Oktober 1983;& JP-A-58 116246 (Sumitomo) 11 Juli 1983

## Beschreibung

Die Erfindung betrifft eine Fahrzeugbremsanlage mit einem Bremskraftverstärker nach dem Oberbegriff des Anspruchs 1 bzw. 4.

Aus der DE-C-33 25 854 ist eine Fahrzeugbremsanlage bekannt, bei welcher der Bremsdruck mittels eines Bremskraftverstärkers in Abhängigkeit von einer beim Bremsen erzielten Fahrzeugverzögerung gesteuert wird. Damit soll erreicht werden, daß dem Fahrer bei der Pedalbetätigung die Dosierung der Bremskraft erleichtert wird, insbesondere soll der Fahrer für unterschiedliche Beladungszustände des Fahrzeuges mit einer bestimmten Pedalbetätigung jeweils die gleiche Bremswirkung erzielen können. Hierzu wird die Fahrzeugverzögerung in herkömmlicher Weise gemessen und mit der Pedalkraft verglichen. Wird für die vom Fahrer aufgebrachte Pedalkraft eine Fahrzeugverzögerung erzielt, die geringer ist als ein vorgegebener Sollwert, so erfolgt eine automatische Betätigung des Bremskraftverstärkers, so daß der Sollwert der Fahrzeugverzögerung erreicht wird.

Bei der DE-C-33 25 854 wird die Druckdifferenz im Bremskraftverstärker ausschließlich mittels eines Regelventils gesteuert, das wahlweise eine der beiden Kammern des Bremskraftverstärkers mit einer Druckquelle verbindet. Bei Ausfall des elektrischen Systems (Kabelbruch oder dergleichen) funktioniert der Bremskraftverstärker nicht.

In der nicht vorveröffentlichten britischen Patentanmeldung 89 18 159 ist eine Fahrzeugbremsanlage beschrieben, bei der ein Bremskraftverstärker in die Antiblockier- und auch in die Antischlupfregelung integriert ist. Der Bremskraftverstärker ist dort derart modifiziert, daß er kein herkömmliches mechanisches Ventil zum unter Druck setzen der Überdruckkammer aufweist, sondern nur ein elektromagnetisches Ventilsystem, das von einem zentralen Prozessor in Abhängigkeit von bestimmten Meßwerten gesteuert wird. Als Meßwerte werden insbesondere die Drehgeschwindigkeiten der Räder (Fahrzeugverzögerung), die Pedalkraft etc. herangezogen. Zeigt zum Beispiel ein Drehzahlsensor für die Räder an, daß diese durchdrehen, ohne daß das Bremspedal betätigt ist, so bewirkt die Steuerung über eine Betätigung des elektromagnetischen Ventils eine Betätigung des Bremskraftverstärkers, um das durchdrehende Rad automatisch abzubremsen. Entsprechend wird auch bei anderen Gelegenheiten der Bremskraftverstärker über das elektromagnetische Ventilsystem automatisch gesteuert, beispielsweise werden die vom Bremskraftverstärker in Abhängigkeit vom aufgebrachten Pedaldruck erzeugten Bremskräfte gemessen und in dem Sinne "geglättet", daß eine möglichst sanfte Bremsung ohne abruptes Einsetzen und Aufhören der Wirkung des Bremskraftverstärkers erzielt wird. Bei Ausfall des elektrischen Systems fällt auch bei dieser Fahrzeugbremsanlage der Bremskraftverstärker aus. Auch für die DE 33 25 854 und die DE 22 09 091 gilt dieser Mangel.

Aus der US 46 67 471 ist es bekannt, ein Elektromagnetventil mit einem herkömmlichen, pedalbetätigten Boosterventil in Reihe zu schalten. Die Steuerverbindung zwischen der Vakuumkammer und der Verstärkerkammer erfolgt dort beim normalen Bremsbetrieb über das pedalbetätigte Ventil, dem aber ein Elektromagnet nachgeschaltet ist. Der Bremskraftverstärker wird über das Elektromagnetventil automatisch angesteuert, um ein Anfahren am Berg zu erleichtern.

Aus der US 47 59 255 ist ein Unterdruck-Bremskraftverstärker bekannt, bei dem eine Steuerung des Verstärkers sowohl über ein pedalbetätigtes, mechanisches Ventil als auch über ein Elektromagnetventil erfolgen kann. Das Elektromagnetventil wird dort ebenfalls betätigt, um eine Anfahrt am Berg zu erleichtern.

Patent abstract of Japan, vol. 9, no. 294(M-431)(2017), das als nächstliegender stand der Technik angesehen werden kann, zeigt eine Fahrzeugbremsanlage mit einem Bremspedal zum Erzeugen eines Bremsdruckes in einer hydraulischen Bremsflüssigkeit, einem durch Druckdifferenz betriebenen Bremskraftverstärker, der mittels eines ersten, vom Bremspedal mechanisch beaufschlagbaren Ventils betätigbar ist, einem ersten Sensor zum Ermitteln des vom Bremspedal erzeugten Druckes, zumindest einen zweiten Sensor zum Ermitteln einer Fahrzeugverzögerung oder Drehverzögerung abgebremste Räder, eine Datenverarbeitungsanlage zum Vergleichen der von den Sensoren ermittelten Daten und zum Erzeugen eines vom Vergleichsergebnis abhängigen Steuersignals für ein zweites, elektrisch steuerbares Ventil, mit dem eine Druckdifferenz im Bremskraftverstärker einstellbar ist, wobei der Bremskraftverstärker zwei Kammern aufweist, in denen bei Betätigung des Bremskraftverstärkers unterschiedliche Drucke herrschen, und daß das zweite Ventil im Strömungsweg eines Fluids von der Kammer mit höherem Druck zur Kammer mit geringerem Druck angeordnet ist.

Aus der DE-A-22 09 091 ist eine Vorrichtung zum Regeln des druckmittelbetätigten Kraftverstärkers einer Bremsanlage bekannt, bei dem eine bewegbare Wand in einem Gehäuse an ihren beiden Seiten mit unterschiedlichen Fluddrücken beaufschlagbar ist, so daß die Wand im Gehäuse vorgeschoben wird und auf ein Kraftabgabeglied eine Ausgangskraft in Abhängigkeit von einer Eingangskraft ausübt, die auf die bewegbare Wand über ein Krafteinleitungsglied wirkt, wobei die Ausgangskraft größer ist als die Eingangskraft und auf eine Bremsbetätigungseinrichtung, z.B. einen hydraulischen Hauptzylinder, aufgebracht werden kann. Dabei ist ein elektrisch steuerbares Betätigungsventil vorgesehen, das durch ein Ausgangssignal einer elektronischen Steuereinheit einschaltbar ist, die Signale einer ersten und einer zweiten Kraftmeßrichtung miteinander vergleicht, von denen die erste Kraftmeßeinrichtung die in jedem beliebigen Zeitpunkt auf das Krafteinleitungsglied einwirkenden Kräfte und die zweite auf das Kraftabgabeglied einwirkenden Kräfte mißt.

Die Erfindung hat das Ziel, eine Fahrzeugbremsanlage mit Bremskraftverstärker zu schaffen, mit der auch bei unterschiedlichen Ladezuständen des Fahrzeuges oder unterschiedlichen Zuständen der Bremsen mit einer gegebenen Pedalkraft eine vorgegebene Fahrzeugverzögerung erzielt werden kann und die besonders funktionssicher ist.

Die erfindungsgemäße Lösung dieser Aufgabe ist im Patentanspruch 1 bzw. im Patentanspruch 4 beschrieben.

Vorteilhafte Ausgestaltungen der Erfindung sind den Unteransprüchen zu entnehmen.

Die Erfindung modifiziert also eine Fahrzeugbremsanlage mit einem herkömmlichen Bremskraftverstärker derart, daß zusätzlich zu dem bekannten, rein mechanisch betätigten Ventil zum Steuern der Druckdifferenz in den beiden Kammern des Verstärkers noch ein weiteres Steuerventil überlagernd vorgesehen ist, welches unabhängig vom mechanischen Ventil betätigbar ist, um in Abhängigkeit von den Brems- oder Fahrzustand des Fahrzeuges kennzeichnenden Parametern den Bremskraftverstärker einzustellen. Die den Brems- oder Fahrzeugzustand kennzeichnenden Parameter sind insbesondere die Fahrzeugverzögerung und das Durchdrehen von Rädern.

Mit dem elektromagnetischen Steuerventil für Zusatzluft kann erfindungsgemäß das sogenannte Übersetzungsverhältnis des Bremskraftverstärkers wahlweise eingestellt (gesteuert) werden. Unter dem Übersetzungsverhältnis eines Bremskraftverstärkers versteht man das Verhältnis zwischen der eingegebenen Pedalkraft und der im Kraftweg hinter dem Bremskraftverstärker erzeugten Ausgangskraft, welche üblicherweise direkt in einen Hauptbremszylinder eingeleitet wird, um Bremsdruck in den Bremskreisen eines Fahrzeuges zu erzeugen.

Dieses Übersetzungsverhältnis ist bei einem herkömmlichen Booster mit nur einem mechanisch beaufschlagbaren Ventil durch die geometrischen und hydraulischen Verhältnisse vorgegeben. Erfindungsgemäß ist nun das zweite, elektrisch beaufschlagbare Ventil so ausgelegt, daß mit ihm das Übersetzungsverhältnis des Bremskraftverstärkers wahlweise gesteuert und über den für das mechanische Ventil vorgegebenen Wert vergrößert werden kann. Wird bei einer eingegebenen Pedalkraft eine vorgegebene Sollverzögerung des Fahrzeuges nicht erzielt, so wird mittels des zweiten Ventils ein gewünschtes Übersetzungsverhältnis erzeugt.

Bei Ausfall des elektrischen Systems und damit auch des zweiten, elektrisch betätigbaren Ventils, bleibt das vom Bremspedal mechanisch beaufschlagbare Ventil und damit auch der Bremskraftverstärker wirksam. Das elektrisch betätigbare Ventil ist so ausgelegt, daß es bei Stromausfall derart schließt, daß der Bremskraftverstärker in herkömmlicher Weise funktioniert.

Als zu messende Parameter, in Abhängigkeit von denen das zweite, elektromagnetische Ventil betätigt wird, kommen insbesondere in Betracht
a) die Verzögerung des Fahrzeuges im Verhältnis zur aufgebrachten Pedalkraft;
b) die Beladung des Fahrzeuges, gemessen mit als solches bekannten Lastsensoren;
c) die Temperatur der Reibbeläge der Bremsen des Fahrzeuges (ist diese Temperatur zu groß, d.h. oberhalb eines vorgegebenen Wertes, so erfolgt keine Verstärkung der Bremskraft);
d) der Neigungswinkel des Fahrzeuges, und
e) ob am Fahrzeug ein Anhänger angekuppelt ist oder nicht, oder es wird
f) eine freie Einstellbarkeit des mit dem zweiten Ventil erzeugten Übersetzungsverhältnisses vorgesehen.

Gemäß einer Ausgestaltung der Erfindung ist es möglich, das erste, mechanisch betätigbare Ventil nur dann wirksam werden zu lassen, wenn das zweite, elektrisch betätigbare Ventil aufgrund eines Defektes der elektrischen Anlage nicht funktioniert. Bei funktionierendem elektrischen System wirkt bei dieser Variante der Erfindung also allein das zweite, elektrisch betätigbare Ventil, während der Strömungsweg des mechanischen Ventils verschlossen ist.

Mit dem elektrisch betätigbaren zweiten Ventil läßt sich das Übersetzungsverhältnis des Bremskraftverstärkers nach Bedarf dadurch steuern, daß wahlweise mehr oder weniger Fluid (z.B. Luft) in die einen höheren Druck aufweisende Kammer des Verstärkers eingelassen wird. Herrscht zum Beispiel in der Unterdruckkammer des Bremskraftverstärkers "Vakuum", so kann der Druck in der Überdruckkammer mittels des elektromagnetischen Einlaßventils so lange fein dosiert erhöht werden, bis ein gewünschtes Übersetzungsverhältnis erreicht ist. Das gewünschte Übersetzungsverhältnis wird in Abhängigkeit von zumindest einem der obengenannten Parameter (erzielte Verzögerung bei gegebener Pedalkraft, Beladung des Fahrzeuges, Neigungswinkel etc.) eingestellt. Das momentan erzielte Übersetzungsverhältnis kann mittels Kraftsensoren vor und hinter dem Bremskraftverstärker gemessen werden.

Nachfolgend wird ein Ausführungsbeispiel der Erfindung anhand der Zeichnung näher erläutert. Es zeigt:
- Fig. 1: schematisch eine Fahrzeugbremsanlage mit Bremskraftverstärker;
- Fig. 2: einen Bremskraftverstärker im Längsschnitt;
- Fig. 3: das Ventil V₂ gemäß Fig. 2 in vergrößertem Maßstab;

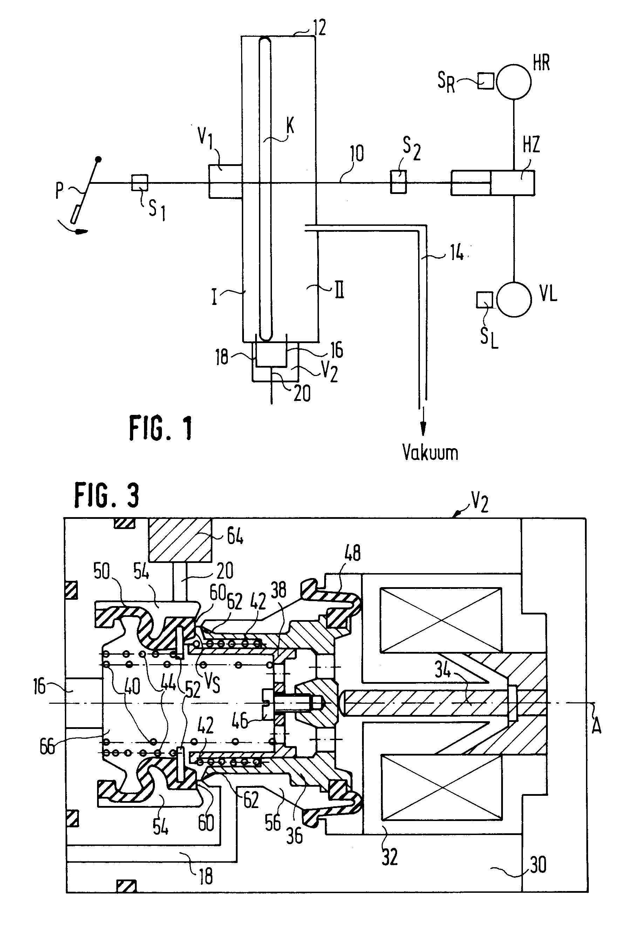

Fig. 1 zeigt in schematischer Darstellung ein Bremspedal P, das zum Bremsen in Richtung des Pfeiles bewegt wird. Die vom Bremspedal erzeugte Kraft wird mittels eines Kraftsensors S₁ gemessen. Im Kraftweg 10 hinter dem Kraftsensor S₁ ist ein Bremskraftverstärker 12 angeordnet, der in herkömmlicher Weise zwei Kammern I, II und einen aufgrund einer Druckdifferenz in den Kammern verschiebbaren Kolben K aufweist. Hinter dem Bremskraftverstärker 12 ist ein weiterer Kraftsensor F₂ im Kraftweg 10 angeordnet, mit dem die mittels des Bremskraftverstärkers 12 verstärkte Kraft meßbar ist. Der Kraftweg 10 führt in einen herkömmlichen Hauptbremszylinder HZ, der in bekannter Weise Hydraulikflüssigkeit unter Druck in Bremskreise einspeist. In Fig. 1 ist ein Bremskreis bestehend aus einem Rad hinten rechts HR und einem Rad vorne links VL gezeigt. An den Rädern sind als solche bekannte Drehzahlsensoren S_{R} und S_{L} angeordnet.

Die Kammer II des Bremskraftverstärkers 12 ist über eine Leitung 14 in bekannter Weise an eine Saugeinrichtung angeschlossen, um in der Kammer II Vakuum zu erzeugen.

Gemäß Fig. 1 sind zwei Ventile V₁ und V₂ zum Steuern des Bremskraftverstärkers 12 vorgesehen.

Das Ventil V₁ ist im Kraftweg 10 angeordnet. Es wird mechanisch betätigt, wenn das Bremspedal P gedrückt wird. Insoweit kann das Ventil V₁ von herkömmlicher Bauart sein.

Zusätzlich ist ein elektromagnetisch betätigbares Ventil V₂ vorgesehen mit zwei Ventilwegen. Ein Ventilweg 16, 18 verbindet die beiden Kammern I und II des Bremskraftverstärkers 12 und ein anderer Ventilweg 18, 20 verbindet die Überdruckkammer I mit einer Fluidquelle, wie z.B. der äußeren Atmosphäre. Die beiden Ventilwege 16, 18 einerseits und 18, 20 andererseits werden alternativ geschaltet, d.h. entweder es werden die beiden Kammern I, II miteinander verbunden, um in beiden Kammern Vakuum anzulegen, oder die Verbindung zwischen den Kammern I, II wird unterbrochen und nur die Kammer I über den Ventilweg 18, 20 mit der äußeren Atmosphäre verbunden. Vorteile des Ventils V₂, insbesondere bezüglich des Umschaltens zwischen den beiden Ventilwegen werden, weiter unten näher erläutert.

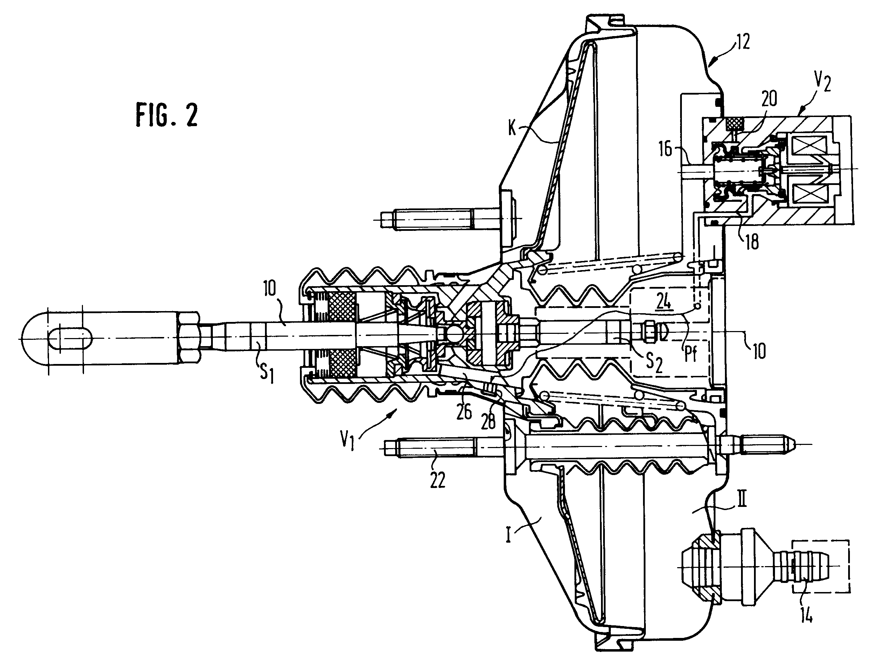

Fig. 2 zeigt den Bremskraftverstärker im Axialschnitt. Der Bremskraftverstärker 12 ist mittels eines Stiftes 22 z.B. an der Spritzwand eines Motorraumes befestigt. Einander entsprechende Bauteile sind in den Figuren mit gleichen Bezugszeichen versehen. Der Strömungsweg zum Belüften der linken Kammer I des Bremskraftverstärkers 12 führt über einen Einlaß 20 in das Ventil V₂ und über dessen Auslaß 18 in einen zentralen Freiraum 24 im Bremskraftverstärker und von dort in einen Kanal 26 und von dort über ein Einwegventil 28 in Richtung des Pfeiles P_{f} in die Kammer I. Auf diesem Wege kann die Kammer I fein dosiert mittels des elektromagnetisch betätigbaren Ventils V₂ mit Druckluft beschickt werden, um das Übersetzungsverhältnis des Bremskraftverstärkers 12 wahlweise zu steuern.

Hierzu werden mittels der Kraftsensoren S₁, S₂ die vor bzw. nach dem Bremskraftverstärker 12 im Kraftweg 10 wirksamen Kräfte gemessen und entsprechende Werte in eine Datenverarbeitungsanlage (nicht gezeigt) eingegeben. Weiterhin werden mittels der Sensoren S_{R}, S_{L} eine Fahrzeugverzögerung beim Bremsen ermittelt. Dies ist aus der ABS-Technik als solches bekannt. Die Datenverarbeitungsanlage vergleicht die beim Bremsen erzielte Fahrzeugverzögerung und setzt diese in Beziehung zur mittels des Bremspedals P erzeugten Eingangskraft am Bremskraftverstärker 12 (Kraftsensor S₁).

Fig. 3 zeigt Einzelheiten des Ventils V₂. Die Funktion der Anschlüsse 16, 18 und 20 des Ventils wurde vorstehend bereits erläutert. Der Anschluß 20 dient als Einlaß für unter relativ hohem Druck stehendes Fluid, beispielsweise atmosphärische Luft.

Das Ventil V₂ weist ein Gehäuse 30 auf, in dem ein Elektromagnet 32 angeordnet ist. Der Anker 34 des Elektromagneten 32 ist in herkömmlicher Weise axial bewegbar entlang der Achse A des Ventils.

Der Anker 34 des Elektromagneten 32 wirkt in Fig. 2 links auf einen Ventilkolben 36, der ebenfalls axial beweglich ist. Im Ventilkolben 36 ist konzentrisch mit diesem eine innere Hülse 38 angeordnet, die ebenfalls in Grenzen axial verschieblich ist. Eine Feder 40 drückt die innere Hülse 38 sowie den Ventilkolben 36 in Fig. 2 nach rechts in die gezeigte Ruhestellung. In dieser Ruhestellung sind die Anschlüsse 16 und 18 des Ventils leitend miteinander verbunden, so daß bei Anwendung des Ventils bei einem Bremskraftverstärker gemäß Fig. 1 beide Kammern I, II des Bremskraftverstärkers besaugt werden. Die Schaltung der einzelnen Ventilwege wird weiter unten näher erläutert.

Außer der relativ schwachen Feder 40, welche den Ventilkolben in die Ruhelage bringt (ggf. unterstützt durch eine elastische Manschette 48), sind noch zwei weitere Federn vorgesehen, nämlich eine zwischen dem Ventilkolben 36 und der inneren Hülse 38 eingefangene Feder 42 sowie eine hierzu koaxiale Feder 44, die eine etwas stärkere Spannkraft aufweist als die Feder 42. Im in Fig. 2 gezeigten Zustand ist die Feder 42 gefesselt, d.h. die Federkraft wird von der Hülse 38 aufgefangen und über den Bolzen 46 in den Kolben 36 eingeleitet.

Ein Bolzen 46 führt die innere Hülse 38 im Ventilkolben 36 und erlaubt eine axiale Relativbewegung zwischen diesen Teilen.

Die bereits erwähnte Manschette 48 ist aus elastischem Material und erlaubt eine axiale Bewegung des Ventilkolbens 36.

Eine weitere Manschette 50 aus elastischem Material weist stirnseitig einen Ventilsitz V_{S} auf. In die Manschette 50 fest eingefügt ist ein Stahlring 52, der als Anschlag für die Feder 44 und die innere Hülse 38 dient.

Zwischen dem Gehäuse 30 und der Manschette 54 ist ein Freiraum 54 gelassen und entsprechend besteht ein Freiraum 56 zwischen dem Ventilkolben 36 und dem Gehäuse 30.

Am Gehäuse 30 ist integral ein Sitzring 60 ausgebildet, der im Zustand gemäß Fig. 2 in Eingriff mit dem Ventilsitz V_{S} steht.

Durch diesen Eingriff des Sitzringes 60 mit dem Ventilsitz V_{S} wird der Einlaß 20 des Ventils V₂ abgesperrt, so daß keine atmosphärische Luft in das Ventil eintreten kann.

Weiterhin ist auf der dem Ventilsitz V_{S} zugekehrten Stirnseite des Ventilkolbens 36 ein weiterer Sitzring 62 ausgebildet, der im in Fig. 2 gezeigten Zustand noch nicht mit dem Ventilsitz in Eingriff steht.

Vor dem Einlaß 20 des Ventils V₂ ist ein Filter 64 angeordnet.

Die Funktion des Ventils V₂ ist wie folgt. Im Ruhezustand gemäß Fig. 3 sind der Einlaß 20 und der zugehörige umlaufende Freiraum 54 abgesperrt, weil der Ventilsitz V_{S} durch die Feder 44 über den Anschlag 52 nach rechts gegen den Sitzring gedrückt ist.

In diesem Zustand verläuft ein Strömungsweg vom Anschluß 16 des Ventils über einen Freiraum 66 durch eine Lücke zwischen dem Anschlag 52 und der inneren Hülse 38 sowie eine weitere Lücke zwischen den Sitzringen 60, 62 in den Kanal 18. In der Fig. 2 sind die Sitzringe 60, 62 zwar sehr eng nebeneinander gezeichnet, jedoch ist zwischen ihnen ein Luftdurchgang möglich.

Wird nun der Elektromagnet 32 betätigt, so drückt der Anker 34 in Fig. 2 nach links auf den Ventilkolben 36. Der Ventilkolben 36 bewegt sich deshalb ebenfalls nach links. Dabei wird auch die innere Hülse 38 über die Feder 42 nach links bewegt, bis sie mit ihrer linken Stirnkante gegen den Anschlag 52 stößt. Dabei wird zunächst die Bewegung der inneren Hülse 38 unterbrochen, weil die Federkraft der Feder 42 z.B. 20 % kleiner ist als die Federkraft der Feder 44. Bevorzugt sind die Federn 42, 44 so bemessen, daß die eingefangene Feder 42 5 bis 25 %, bevorzugt 10 bis 25 % geringere Federkraft aufweist als die von links auf den Anschlag 52 wirkende Feder 44.

Der Elektromagnet 32 schiebt nun den Ventilkolben 36 in Fig. 2 weiter nach links bis die Kante 62 des Ventilkolbens 36 gegen den Ventilsitz V_{S} stößt. Dabei drückt die Kante 62 den Ventilsitz gegen die Kraft der Feder 44 nach links, so daß der Ventilsitz V_{S} von der Kante 60 des Gehäuses 30 abhebt.

Steht die Schneidkante 62 des Ventilkolbens 36 mit dem Ventilsitz V_{S} in abdichtendem Eingriff, so ist der Anschluß 16 des Ventils V₂ abgesperrt. Hebt andererseits, wie vorstehend beschrieben, dabei der Ventilsitz V_{S} vom Sitzring 60 ab, so ist ein Strömungsweg geschaffen vom Einlaß 20 über den Freiraum 54 in den weiteren Freiraum 56 und von dort in den Kanal 18. Somit kann das unter Druck stehende Fluid vom Einlaß 20 in den Kanal 18 strömen.

Die vorstehend beschriebene Anordnung der Federn ermöglicht ein sehr exaktes Steuern des Ventils mit relativ geringen Kräften. Durch die eingefangene Feder 42 wird nämlich die Schließwirkung der Feder 44 unmittelbar vor dem Betätigen des Ventils "abgeschwächt". Stößt nämlich die innere Hülse 38 gegen den Anschlag 52, so drückt bereits die eingefangene Feder 42 mit einer Kraft gegen den Anschlag 52 und damit den Ventilsitz V_{S}, die nur um einige Prozent geringer ist als die Spannkraft der Schließfeder 44. Es genügt deshalb im besonders kritischen Bereich der Bewegung des Ventils, in dem eine Öffnung bzw. Schließung desselben erfolgt, eine relativ geringe Kraft zur Ventilbetätigung.

Somit kann die Steuerung der Fluidströmung mittels des Ventils sehr feinfühlig und exakt erfolgen. Das Ventil ermöglicht eine exakte Dosierung und spricht quasi verzögerungsfrei an.

Das Ventil V₂ wirkt zum Steuern des Bremskraftverstärkers 12 in Abhängigkeit von Steuerbefehlen einer Datenverarbeitungsanlage, welche die Steuerbefehle gemäß gemessenen Parametern ableitet, wobei die Parameter sich aus dem Fahrzeug- oder Bremsenzustand ergeben, wie die bei einer gegebenen Eingangskraft erzielten Fahrzeugverzögerung, der Beladungszustand, die Temperatur in den Bremsen (gemessen mittels eines nicht gezeigten Temperatursensors) und/oder dem Neigungswinkel des Fahrzeuges (bei Fahrt oder Stillstand an einem Hang; gemessen mit einem nicht gezeigten) Neigungswinkelsensor.

Das Ventil V₂ wirkt zusätzlich zum als solches herkömmlichen mechanischen Ventil V₂. Beim mechanischen Venitl V₁ wirkt dann eine Hilfskraft (Servokraft), wenn eine Druckdifferenz zwischen den Kammern I und II den Kolben K (Membranteller) in Fig. 1 nach rechts bewegt. In herkömmlicher Weise wird dabei vom Zustand des mechanischen Steuerventils V₁ bestimmt, ob eine Kraftunterstützung am Kolben K stattfindet oder nicht. Wird das Ventil V₁ einmal aus der Grundstellung nach vorne (bei Pedalbetätigung) bewegt, so fährt der Kolben K solange nach vorn, bis zwei Sitzringe auf einem Ventilsitz aufliegen (Grundstellung). Dieses Zusammenspiel bestimmt das rein mechanische Übersetzungsverhältnis des Bremskraftverstärkers. In herkömmlicher Weise ist dabei vorgesehen, daß sich der mechanische Steuerkolben in einer gewissen zeitlichen Voreilung gegenüber der Kolbenstange befindet (bis zum Stillstand des Pedals), damit das Pedal nicht am Anfang einer Bremsbetätigung ohne Verstärkungskraft angetreten werden muß.

Kommt dann das Bremspedal zum Stillstand, so schließt das mechanische Ventil V₁ in herkömmlicher Weise wieder und es herrscht eine Verstärkungskraft im Bremskraftverstärker gemäß dem gerade herrschenden Druckunterschied zwischen den Kammern I und II. Je nach dem erreichten Kräftegleichgewicht herrscht in der Kammer I der maximale Atmosphärendruck oder auch ein geringerer Druck.

Die Erfindung sieht nun vor, daß mittels des elektromagnetisch gesteuerten Ventils V₂ entsprechend dem gemessenen Parameter (siehe oben, S. 4 und 5) das zunächst durch das mechanische Ventil vorgegebene Übersetzungsverhältnis wahlweise geändert wird, indem über das elektromagnetische Ventil V₂ mehr Atmosphärendruck in die Kammer I gelassen wird, so daß eine zusätzliche Komponente der Verstärkungskraft erzeugt wird. Dies setzt selbstverständlich voraus, daß über das mechanische Ventil V₁ der Bremskraftverstärker noch nicht auf seinen Maximalwert ausgesteuert ist, d.h. daß in der Kammer I noch nicht der volle Atmosphärendruck herrscht.

Das vorstehend beschriebene Ausführungsbeispiel der Erfindung, bei dem nur ein Elektromagnetventil V₂ vorgesehen ist, kann dahingehend abgewandelt werden, daß zwei Elektromagnetventile eingesetzt werden, eines zur Unterbrechung der Fluidverbindung zwischen den Kammern I und II und ein weiteres Elektromagnetventil zur Einsteuerung der Zusatzluft in die Kammer I.

Ein innerhalb eines Kanales, der die Überdruckkammer I mit der Unterdruckkammer II verbindet, angeordnetes Rückschlagventil kann zur Überdruckkammer öffnen. Damit ist ermöglicht, daß in der Regelstellung des pedalbetätigten mechanischen Ventils V₁ zusätzliche Luft in die Überdruckkammer I einströmen kann.

## Patentansprüche

1. Fahrzeugbremsanlage mit
- einem Bremspedal (P) zum Erzeugen eines Bremsdruckes in einer hydraulischen Bremsflüssigkeit,
- einem durch Druckdifferenz betriebenen Bremskraftverstärker (12), der mittels eines ersten, vom Bremspedal (P) mechanisch beaufschlagbaren Ventils (V₁) betätigbar ist, und
- einem ersten Sensor (S₁) zum Ermitteln des vom Bremspedal erzeugten Druckes,
- zumindest einem zweiten Sensor (S_{R}, S_{L}) zum Ermitteln einer Fahrzeugverzögerung oder Drehverzögerung abgebremster Räder,
- einer Datenverarbeitungsanlage zum Vergleichen der von den Sensoren (S₁, S_{R}, S_{L}) ermittelten Daten und zum Erzeugen eines vom Vergleichsergebnis abhängigen Steuersignals für ein zweites, elektrisch steuerbares Ventil (V₂), mit dem eine Druckdifferenz im Bremskraftverstärker (12) einstellbar ist, wobei das zweite Ventil (V₂) einen Einlaß (20) für ein unter relativ hohem Druck stehendes Fluid und Auslässe (16, 18) für das Fluid aufweist,
dadurch **gekennzeichnet**, daß
das zweite Ventil (V₂) mit einem Ventilkolben (36) versehen ist, der mittels eines Elektromagneten (32) axial in Richtung auf einen Ventilsitz (V_{S}) verschiebbar ist, der mittels einer ersten Feder (44) in entgegengesetzter Richtung axial vorgespannt ist, wobei der Ventilkolben (36) bei einer Bewegung in Richtung auf den Ventilsitz (V_{S}) vor oder bei seinem Auftreffen auf den Ventilsitz (V_{S}) über eine zweite Feder (42) in Wirkeingriff kommt mit einem Anschlag (52), der mit dem Ventilsitz (V_{S}) verbunden ist, und wobei die erste Feder (44) eine größere Spannkraft hat als die zweite Feder (42).

2. Fahrzeugbremsanlage nach Anspruch 1,
wobei der Bremskraftverstärker (12) zwei Kammern (I, II) aufweist, in denen bei Betätigung des Bremskraftverstärkers unterschiedliche Drücke herrschen,
dadurch **gekennzeichnet**, daß
das zweite Ventil (V₂) im Strömungsweg eines Fluids von der Kammer (I) mit höherem Druck zur Kammer (II) mit geringerem Druck angeordnet ist.

3. Fahrzeugbremsanlage nach Anspruch 2,
dadurch **gekennzeichnet**, daß
das zweite Ventil (V₂) zwei Wege (16, 18, 20) aufweist, wovon einer die zwei Kammern (I, II) verbindet und der andere die bei Betätigung höheren Druck aufweisende Kammer (I) mit der äußeren Atmosphäre verbindet.

4. Fahrzeugbremsanlage mit
- einem Bremspedal (P) zum Erzeugen eines Bremsdruckes in einer hydraulischen Bremsflüssigkeit, und
- einem durch Druckdifferenz betriebenen Bremskraftverstärker (12), der mittels eines ersten, vom Bremspedal mechanisch beaufschlagbaren Ventils (V₁) betätigbar ist,
- einem zweiten, elektrisch beaufschlagbaren Ventil (V₂), welches von einer Datenverarbeitungsanlage in Abhängigkeit von durch Fahrzeug- oder Bremszustände bestimmten und gemessenen Parametern so betätigt wird, daß eine gewünschte Druckdiffernz erzeugt wird, wobei das zweite Ventil (V₂) einen Einlaß (20) für ein unter relativ hohem Druck stehendes Fluid und Auslässe (16, 18) für das Fluid aufweist,
dadurch **gekennzeichnet**, daß
das zweite Ventil (V₂) mit einem Ventilkolben (36) versehen ist, der mittels eines Elektromagneten (32) axial in Richtung auf einen Ventilsitz (V_{S}) verschiebbar ist, der mittels einer ersten Feder (44) in entgegengesetzter Richtung axial vorgespannt ist, wobei der Ventilkolben (36) bei einer Bewegung in Richtung auf den Ventilsitz (V_{S}) vor oder bei seinem Auftreffen auf den Ventilsitz (V_{S}) über eine zweite Feder (42) in Wirkeingriff kommt mit einem Anschlag (52), der mit dem Ventilsitz (V_{S}) verbunden ist, und wobei die erste Feder (44) eine größere Spannkraft hat als die zweite Feder (42).

## Claims

1. A vehicle brake system, comprising
- a brake pedal (P) to generate brake pressure in an hydraulic brake fluid,
- a brake pressure booster (12) operated by differential pressure and adapted to be actuated by a first valve (V₁) which is pressurizable mechanically by the brake pedal (P), and
- a first sensor (S₁) to detect the pressure generated by the brake pedal,
- at least one second sensor (S_{R}, S_{L}) to detect a vehicle deceleration or rotational retardation of braked wheels,
- a data processing unit to compare the data determined by the sensors (S₁, S_{R}, S_{L}) and to generate a control signal in response to the result of the comparison for a second valve (V₂) which is controllable electrically and by which a pressure difference is adjustable in the brake pressure booster (12), the second valve (V₂) having an inlet (20) for fluid under relatively high pressure and outlets (16,18) for the fluid, **characterized** in that the second valve (V₂) is provided with a valve plunger (36) which is displaceable axially by an electromagnet (32) in the direction of a valve seat (V_{S}) biased axially in the opposite direction by a first spring (44), a second spring (42) causing the plunger (36) to enter into functional engagement with a stop (52) connected to the valve seat (V_{S}), while it is being moved toward the valve seat (V_{S}) but before or as it touches the valve seat (V_{S}), and the tension of the first spring (44) being greater than that of the second (42) one.

2. The vehicle brake system as claimed in claim 1, wherein the brake pressure booster (12) comprises two chambers (I,II) in which different pressures prevail upon actuation of the brake pressure booster, **characterized** in that the second valve (V₂) is positioned in the flow path of a fluid from the higher pressure chamber (I) to the lower pressure chamber (II).

3. The vehicle brake system as claimed in claim 2, characterized in that the second valve (V₂) includes two paths (16, 18, 20), one of which interconnects the two chambers (I,II), while the other connects the chamber (I) having the higher pressure upon actuation to the ambient atmosphere.

4. A vehicle brake system, comprising
- a brake pedal (P) to generate brake pressure in an hydraulic brake fluid, and
- a brake pressure booster (12) operated by differential pressure and adapted to be actuated by a first valve (V₁) which is pressurizable mechanically by the brake pedal,
- a second valve (V₂) which is controllable electrically and actuated by a data processing unit in response to measured parameters determined by vehicle or brake conditions so that a desired pressure difference is produced,the second valve (V₂) having an inlet (20) for fluid under relatively high pressure and outlets (16,18) for the fluid,
**characterized** in that the second valve (V₂) is provided with a valve plunger (36) which is displaceable axially by an electromagnet (32) in the direction of a valve seat (V_{S}) biased axially in the opposite direction by a first spring (44), a second spring (42) causing the plunger (36) to enter into functional engagement with a stop (52) connected to the valve seat (V_{S}), while it is being moved toward the valve seat (V_{S}) but before or as it touches the valve seat (V_{S}), and the tension of the first spring (44) being greater than that of the second (42) one.

## Revendications

1. Installation de freinage de véhicule comportant
- une pédale de frein (P) pour exercer une force de freinage sur un fluide hydraulique de freinage,
- un amplificateur de la force de freinage (12), commandé par différence de pression, qui peut être actionné par une première soupape (V₁), commandable mécaniquement par la pédale de frein (P),
- un premier détecteur (S₁) pour capter la pression exercée par la pédale de frein,
- au moins un deuxième détecteur (S_{R}, S_{L}) pour capter un ralentissement du véhicule ou de la rotation de roues soumises à un freinage,
- une installation comportant un ordinateur pour comparer les données captées par les détecteurs (S₁, S_{R}, S_{L}) et pour élaborer un signal de commande dépendant du résultat de la comparaison, et destiné à une deuxième soupape (V₂) commandable électriquement, avec laquelle une différence de pression peut être créée dans l'amplificateur de force de freinage (12), la deuxième soupape (V₂) possédant une entrée (20) pour un fluide se trouvant sous une pression relativement élevée et des sorties (13, 18) pour ce fluide,
caractérisée en ce que
la deuxième soupape (V₂) est équipée d'un piston de soupape (36) qu'on peut, au moyen d'un électroaimant (32), faire coulisser axialement en direction d'un siège de soupape (V_{S}), lui-même soumis à une précontrainte axiale en sens opposé par un premier ressort (44) le piston de soupape (36), lorsqu'il se déplace en avant en direction du siège de soupape (V_{S}), ou lorsqu'il rencontre le siège de soupape (V_{S}), agissant, par l'intermédiaire d'un deuxième ressort (42), sur une butée (52) reliée au siège de soupape (V_{S}), et étant entendu que le premier ressort (44) exerce un effort plus grand que le deuxième ressort (42).

2. Installation de freinage de véhicule suivant la revendication 1, dans laquelle l'amplificateur de force de freinage (12) présente deux chambres (I, II) dans lesquelles règnent, lorsqu'agit l'amplificateur de force de freinage, des pressions différentes,
caractérisée en ce que
la deuxième soupape (V₂) est disposée sur le trajet d'écoulement d'un fluide allant de la chambre (I), où règne la pression la plus forte, à la chambre (II), où règne la pression la plus faible.

3. Installation de freinage de véhicule suivant la revendication 2, caractérisée en ce que la deuxième soupape (V₂) présente deux passages (16, 18, 20), dont l'un relie les deux chambres (I, II), et l'autre relie à l'atmosphère extérieure la chambre (I), présentant la pression la plus forte lors de l'actionnement.

4. Installation de freinage de véhicule comportant
- une pédale de frein (P) pour exercer une force de freinage sur un fluide hydraulique de freinage,
- un amplificateur de la force de freinage (12), commandé par différence de pression, qui peut être actionné par une première soupape (V₁), commandable mécaniquement par la pédale de frein (P),
- une deuxième soupape (V₂) commandable électriquement, qui est actionnée par une installation comportant un ordinateur, en fonction de paramètres, déterminés par les conditions dans lesquelles se trouvent le véhicule ou les freins, et mesurés, de telle façon que la deuxième soupape (V₂) crée une différence de pression souhaitée, étant entendu que la deuxième soupape (V₂) présente une entrée (20) pour un fluide se trouvant sous une pression relativement élevée et des sorties (16, 18) pour ce fluide,
caractérisée en ce que
la deuxième soupape (V₂) est équipée d'un piston de soupape (36) qu'on peut, au moyen d'un électroaimant (32), faire coulisser axialement en direction d'un siège de soupape (V_{S}), lui-même soumis à une précontrainte axiale en sens opposé par un premier ressort (44) étant entendu que le piston de soupape (36), lorsqu'il se déplace en avant en direction du siège de soupape (V_{S}), ou lorsqu'il rencontre le siège de soupape (V_{S}), agit, par l'intermédiaire d'un deuxième ressort (42), sur une butée (52) reliée au siège de soupape (V_{S}), et étant entendu que le premier ressort (44) exerce un effort plus grand que le deuxième ressort (42).
